Europäisches Patentamt

European Patent Office

Office européen des brevets

(11) Publication number: **0 409 219 A2**

# EUROPEAN PATENT APPLICATION

(21) Application number: 90113811.5

(51) Int. Cl.5: **G01S 13/90**

(22) Date of filing: **19.07.90**

(30) Priority: **21.07.89 IT 4821989**

(43) Date of publication of application:
**23.01.91 Bulletin 91/04**

(84) Designated Contracting States:
**DE FR GB NL SE**

(71) Applicant: **SELENIA INDUSTRIE
ELETTRONICHE ASSOCIATE S.p.A.
Via Tiburtina, KM 12.400
I-00131 Roma(IT)**

(72) Inventor: **Farina, Alfonso
Via delle Vigne, 80
I-00148 Roma(IT)**
Inventor: **Morabito, Carlo Francesco
Via T. Lupo, 4
I-89010 Cannitello(IT)**

(74) Representative: **Gustorf, Gerhard, Dipl.-Ing.
Patentanwalt Dipl.-Ing. Gerhard Gustorf
Bachstrasse 6 A
D-8300 Landshut(DE)**

(54) Recursive system for image forming by means of a spotlight synthetic aperture radar.

(57) Recursive system for the forming of a radar image by means of a SAR sensor, for applications preferably related to the radar field.

Such SAR system is essentially made up of a monodimensional transformation system (1) of the signal received by the radar; a convolution element (2) of the same signal by means of a monodimensional inverse transformation (3). The result of the convolution is retro-projected by means of element (4). In turn, the result of this operation, envelope-detected (5), provides an estimate of the electromagnetic characteristics of the teledetected scene.

The invention belongs to the radar application field, and more precisely to that of synthetic aperture radars for teledetection. It finds its best application in the area of synthetic aperture radar signal processing.

FIG. 1

EP 0 409 219 A2

## RECURSIVE SYSTEM FOR IMAGE FORMING BY MEANS OF A SPOTLIGHT SYNTHETIC APERTURE RADAR

The invention hereby presented refers to a system for the processing of the signals related to a synthetic aperture radar, operating in Spotlight mode. Such processing system presents advantages compared to state of the art systems, in terms of:
- Quality of the image obtained,
- ability to generate the image in a recursive manner with increasing resolution,
- efficiency of the processing structure.

This invention pertains to the imaging radar digital signal processing field and is capable of regenerating a reflectivity map as a function of space coordinates of an extended scene, such as the Earth surface or an object of limited dimensions such as a vehicle moving on the Earth or an aircraft flying at a given distance from the Earth surface.

The imaging radar theory is based upon the concept of synthetic aperture. It is extensively described in the following reference: Asherman. D. et al: "Developments in radar imaging" IEEE Transactions on Aerospace and Electronic Systems, Vol AES-20, N4, July 1984, p. 363.--

In short, the scene to be teledetected by a set of electromagnetic pulses transmitted by an airborne or a satellite borne radar.

By means of a suitable processing of the signals received by the radar, due to the scattering effect of the scene, it is possible to reconstruct the electromagnetic reflectivity map as a function of space coordinates, in a suitable reference system which contains the scene and the motion of the radar.-- The article also introduces the spotlight operating mode .

Here, the radar antenna radiated beam is continuously pointed onto a limited portion of the scene, despite the movement of the radar itself. Such a system provides furthermore high resolution due to the illumination time of the radar towards the limited portion of the scene.

In the paper by Munson, D.C. et al "A Tomographic Formulation of Spotlight Mode Synthetic Aperture Radar oc." IEEE, Vol 71, August 1983, pp 917/925 a method for the processing of the signal is presented, constituting a state of the art application in this field. With reference to figure 7 of such a paper, the processing of the signal received by the radar is performed along the following three processing steps after analogue to digital conversion:

i) interpolation of the data received and set on a polar grid so as to form new data on a cartesian plane;

ii) bidimensional inverse transform of data by means of the Fast Fourier Transform (FFT);

iii) Extraction of the modules and display.

A system of this kind suffers the following drawbacks:

a) It is impossible to obtain a high resolution image of sufficiently high quality. High resolution implies data acquisition over a wide radar observation angle. Therefore the polar grid, which hosts the data to be processed, is quite different than the Cartesian grid onto which the data is interpolated. The interpolation error which arises introduces a deformation and defocusing of the final image.

b) High processing load due to the polar-Cartesian interpolation and to the bidimensional transformation. It can be demonstrated that the number of multiplications required by the overall algorithm is proportional to $N^{*}4$, [x]with N equal to the number of data set on the polar grid.

c) The scene image is presented only upon completion of acquisition of all data by the radar.

The subject of this invention is therefore a new processing scheme which eliminates drawbacks (a), (b), and (c).

The system provides an image which has high resolution and high quality. The processing load of the algorithm adopted is of the order of $N^{*}2$ [xx]log N. The image is furthermore obtained in a recursive manner, i.e. as data is acquired by the radar, without waiting for completion of the entire data set. This results in a sensor which provides images having a quality which increases in real time.

The invention will now be described for non limiting illustrative purposes making reference to the tables of drawings attached.

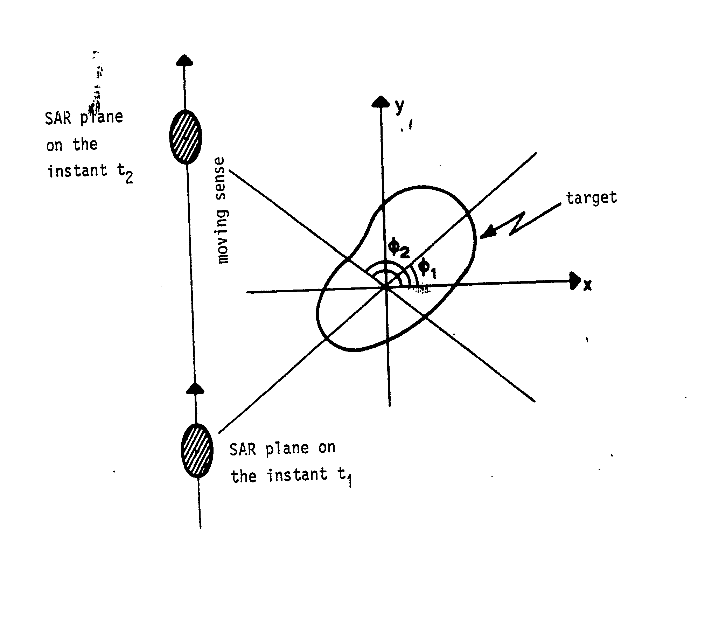

As we have already seen, figure 1 shows the geometry of the target teledetection by means of a Spotlight SAR.

Figure 1 is the geometry of the teledetection process of a target by means of a Synthetic Aperture

[x] $N^4$

[xx] $N^2$

Radar operating in Spotlight mode. The Radar data is collected at times t1 and t2, i.e. under an angle which varies between Phi1 and Phi2. ($\phi_1$ and $\phi_2$).

Figure 2 shows the operating principle of a Spotlight SAR processor described by this invention application.

It is to be considered the most significant figure. It shows:

1 Monodimensional transformation element by means of FFT algorithm;

2 Convolution processing element;

3 Monodimensional processing element for FFT inverse transform;

4 Processing element for retroprojection of the input signal;

5 Input signal envelope extractor processing element.

This schematic is an application which follows directly equation (3) which is an original interpretation of expression (1) well knows in literature (see the following).

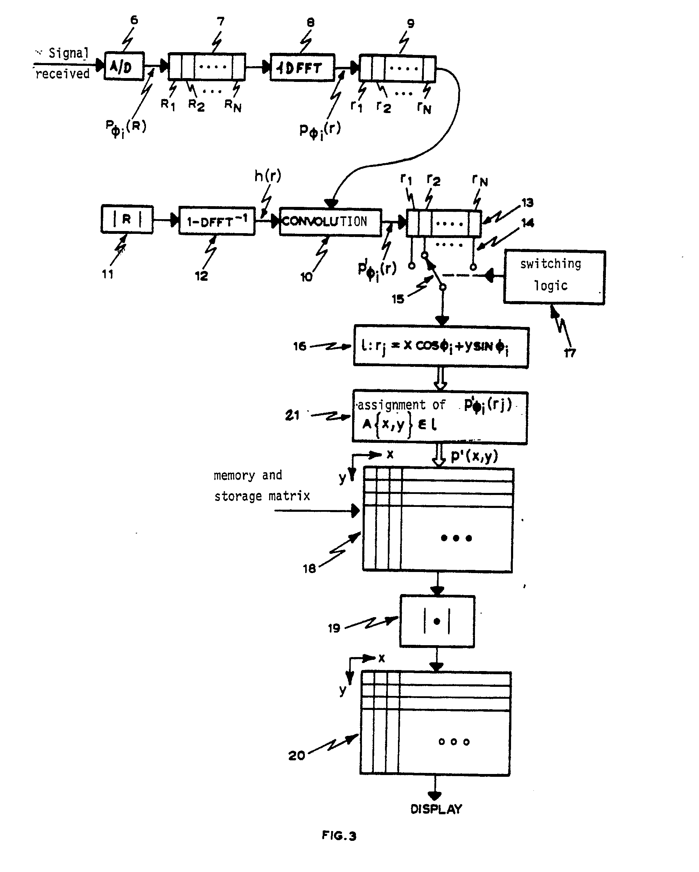

Figure 3 is the application schematic presently preferred by the inventors for the processing of a Spotlight SAR, where the following are visible:

6 Analogue to digital converter of the signal received by the radar;

7,9,13 Shift registers;

8 Dedicated hardware for FFT monodimensional processing

10 Hardware dedicated to convolution operations;

11 Look up Table memory;

12 Hardware dedicated to inverse monodimensional FFT processing;

14 Access to the memory positions of the shift register;

15 switch;

16 Transforming element of Cartesian-polar coordinates;

17 switching logic element;

18-20-21 memories;

19 Envelope extractor.

It is assumed that the radar transmits a pulse burst, each pulse coded by means of a linear frequency shift (CHIRP).

Lets indicate with delta zero (X,Y) [x)]the target reflectivity map; lets also indicate with Sigma zero (...) [xx)]the bidimensional Fourier Transform of the original reflectivity function Delta zero (X,Y). [x)]Lets furthermore indicate with Rho (r, Phi) [xxx)]the projection of the reflectivity function Delta zero (X,Y) [x)]along the viewing angle Phi [iv)]and with P_Phi (.) [v)]the corresponding Fourier transform. A fundamental result, due to Munson et Al. (refer to the previous reference), is given by the following formula which ties the Fourier transform of the projection of the reflectivity function to the bidimensional transform of the reflectivity itself: $P_\phi (R) = \Sigma_0 (R \cos \phi, R \sin \phi)$ P Phi (R) = Sigma zero (R cos Phi, R sin Phi) (1) where R is the radial coordinate on the Fourier Transform plane. Equation (1) is the starting point which has given origin to the state of the art processing system and the processing system presented in this patent application. The scheme proposed by Munson acts upon data making them pass through three presentation domains:

[x)] $\delta_0 (X, Y)$

[xx)] $\Sigma_0 ( , )$

[xxx)] $\rho (r, \phi)$

[iv)] $\phi$

[v)] $P_\phi ( )$

$\{P..Phi\}$,   Natural domain where radar data is received

$\{P \cdots \phi\}$   by the radar sensor;

interpolation $\Downarrow$

(X,Y)   Cartesian coordinates in the transform

domain;

2D interpolation $\Downarrow$

(X,Y)   Cartesian coordinates in the physical

domain of the reflectivity map.

The schematic, treated by this patent application, recognizes the original data as monodimensional transforms of a projection, which makes possible representing the reflectivity map in the physical domain X,Y by means of a simple retroprojection operation;

$\{R, \phi\} = (R, Phi)$   natural domain of the signals received;

$\Downarrow$ 1-d transformation

$\{r, \phi\} = (r, Phi)$   normal coordinates in the physical domain

of the reflectivity map;

2-D retroprojection

(X,Y)   Cartesian coordinates in the reflectivity

map physical domain.

The mathematical theory through which the processing system of this invention may be implemented is the following.

Equation (1) provides the following expression for an estimate of the reflectivity map:

(2)

$$\hat{\sigma}_0 (x,y) = \int_0^{\pi} d\phi \int_{-\infty}^{\infty} P_\phi (R) |R| exp\{ j 2\pi R (x \cos\phi + y \sin\phi) \} dR$$

Equation (2) may be rewritten as:

Sigma zero (x, y)=.......

$$\hat{\sigma}_0(x,y) = \int_0^\pi \mathcal{F}^{-1}\{P_\phi(R)\,|R|\}\,d\phi = \int_0^\pi [p(r,\phi) * \mathcal{F}^{-1}\{|R|\}]\,d\phi = \int_0^\pi p'(r,\phi)\,d\phi$$

(3)

Where F-1(.) [x] is the inverse Fourier transform and "*" is the convolution operation. The processing scheme, based upon equation (3) is shown in figure (2).

The signals which are received by the analogue to digital converter are samples of function P Phi (R). [xx]For different values of the pair of variables Phi [xxx]and R, block 1 performs a Fast Fourier Transform in a single dimension, so as to provide at its output projection Rho Phi(r). [iv]Block 2 performs a convolution between this function and a purposely developed function h(r), which is obtained from block 3 which performs a single dimension inverse of function /R/. At the convolution output we find Rho' Phi(r). Block 4 thereafter performs the retroprojection action, i. e. the integration of Rho' Phi(r) [v]in variable Phi over the interval

(0.$\pi$)
(0.Pi).

The final image is obtained by extracting the modules of the estimated reflectivity function as a function of Cartesian coordinates (x,y) Starting from normal coordinates (r.Phi). = (r, $\phi$)

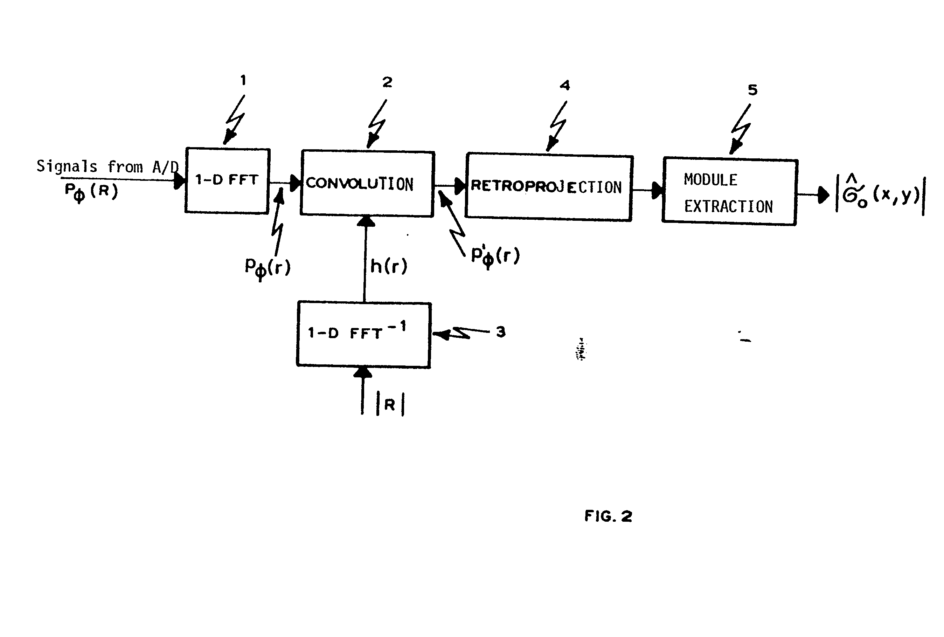

It is worth noting that the schematic of figure 2 gives way to further variants corresponding to the adoption of functions which are different than /R/ used at the input of block 3. This has the purpose to improve the possibility of implementing the filter function h(r) and to highlight particular aspects of image /delta zero (x.y)/. = | $\delta_0$ (x,y)|.

With reference to Figure 3 a possible implementation scheme of the system of interest to this invention is described.

Clearly radar experts may derive different schemes than that of figure 3, but all are based upon the original principles detailed in the present invention. Such schemes derived should be considered as further possible implementations of the principles shown in figure 2 and therefore subject to the limitations posed by this patent.

The signal received by the analogue to digital converter 6, when the radar antenna is poining onto the target with an angle Phi i, [x]forms a string of samples of signal P related to angle Phi i [x]and when R takes

[x] $F^{-1}\{\ \}$

[xx]$P_\phi$ (R)

[xxx] $\phi$

[iv]$\rho_\phi(r)$

[v]$\rho'_\phi$ (r)

[x]$\phi_i$

the N values R1 R2,....Rn, the N samples of P Phi (R) [xx]are saved in register 7, Thereafter such samples are transformed by means of block 8, which implements the 1-D operation by means of standard techniques . The resulting signal rho Phi (r) [xxx]is loaded into another register and then sent to block 10 which performs convolution. The convolution operation is also implemented by means of standard devices which adopt shift registers and accumulators.

Signal Rho Phi i (r) [iv]is then convoluted with signal h(r) obtained from blocks 11 and 12. Block 11 is a look-up table which reports the numeric values of /R/ in table form. The result of the convolution operation Rho'Phi(r) [v]is stored in the new register 13. Each cell of this register is now accessible sequentially through connecting lines 14 and switch 15. The contents of this cell are sent to block 16. Switch 15 is controlled by block 17, which operates according to a cabled logic. Block 16 calculates the equation in Cartesian coordinates (x,y), which are the physical coordinates of the plane of the target,of the line defined as:

$$(4) \qquad \ell_i : r_j = x \cos \phi_i + y \sin \phi_i \qquad \begin{array}{l} j \in 1, \cdots, N \\ i \in 1, \cdots, M \end{array}$$

Block 21 assigns the value of function Rho' Phi i (r zero) [x]to all points having coordinates (x,y) belonging to line 1. Blocks 16 and 21 can be conveniently implemented by means of microprogrammable integrated circuits. Such values load the corresponding cells of matrix 18. This matrix is structured in lines and columns according to the coordinates axes (x,y) of the target plane. The dimensions of such matrix depend upon the dimensions of the scene to be teledetected and upon the depth of field of the sensor. Processing is concluded by extracting the modules of the contents of each cell of the matrix 18 and by loading the result in a cell corresponding to a new matrix having the same size as previous 18. The contents of matrix 20 may be sent to a display device.

It is worth noting that a device may be inserted between block 21 and 18 with the task of interpolating function $\rho'(r)$ to obtain a new set of N values $\rho'(r_1^*)$, $\rho'(r_2^*)$ ... $\rho'(r_n^*)$, starting from the measured data $\rho'(r_1)$, $\rho(r_2)$, ... $\rho)(r_n)$. The new-values $\rho'(r^*)$ are selected so as to minimize the mean square differences between line 1 and its approximation $\{\rho'(r_i^*), i = 1, ...N\}$.

This unidimensional interpolation is much less cumbersome in terms of processing requirements than the bidimensional processing between polar and Cartesian grids, performed in present state of the art systems.

As soon as the radar provides a new set of signals P phi k(R). [x]relevant to new observation angle Phi k, [xx]the entire processing from block 7 to block 21 is repeated. The new signal Rho'(x,y) [xxx]obtained from block 21 is now cumulated coherently with the preceding contained in memory 18. It follows that the final image is reconstructed in a recursive manner while the radar scans the target under different view angles.

## Claims

1. Recursive system for image forming by means of a Spotlight Synthetic Aperture Radar, suitable for radar applications, essentially made up of a signal processing device of the radar data (Figure 2) where the signal

[iv] $\rho_{\phi_i}(r)$

[iv]$\rho'_\phi(r)$

[x] $\rho'_{\phi_i}(r_0)$

[x]$P_{\phi_k}(R)$

[xx] $\phi_k$        [xx] $P_\phi(R)$

[xxx] $\rho'(x,y)$       [xxx] $\rho_\phi(r)$

is processed in accordance with the following operating principle: a monodimensional transformation element (1) acting upon the radar signal; a convolution element (2) of the same signal with a function obtained by monodimensional inverse transform (3). The convolution result is retroprojected by element (4) and in turn the result of this operation, envelope detected (5), provides an estimate of the electromagnetic characteristics of the teledetected scene.

2. Recursive system for image forming by means of a Spotlight Synthetic Aperture Radar, suitable for radar applications, as per claim 1, where the signal received by the radar is converted into digital form by analogue to digital converter 6, memorized in shift register 7, transformed by transforming element 8 and then memorized in shift register 9, where the signal is convoluted by convolution element 10 with another signal obtained by look up table 11 and transforming element 12; The signal obtained is then memorized in shift register 13 so that all samples of the signal are accessible by lines 14 and switch 15 with switching logic 17, through coordinate transformer 16, the result of which is assigned to a group of memory elements 21 and 18 from which, by envelope extraction it is possible to record the teledetected image in memory 20.

SAR plane on the instant $t_2$

moving sense

SAR plane on the instant $t_1$

target

$\phi_2$

$\phi_1$

y

x

Signals from A/D
$P_\phi(R)$ → [1-D FFT] (1) → [CONVOLUTION] (2) → [RETROPROJECTION] (4) → [MODULE EXTRACTION] (5) → $|\hat{\mathcal{G}}_o(x,y)|$

$P_\phi(r)$

$h(r)$

$P'_\phi(r)$

[1-D FFT$^{-1}$] (3)

$|R|$

FIG. 2

FIG.3